(19) **Europäisches Patentamt European Patent Office Office européen des brevets**

(11) **EP 4 272 992 B1**

(12) **EUROPEAN PATENT SPECIFICATION**

(45) Date of publication and mention of the grant of the patent:
**21.01.2026 Bulletin 2026/04**

(21) Application number: **22861765.0**

(22) Date of filing: **26.08.2022**

(51) International Patent Classification (IPC):
**B60L 53/24** (2019.01)    **B60L 53/60** (2019.01)
**H02M 1/00** (2006.01)    **H02M 7/08** (2006.01)
**H02M 3/00** (2006.01)    **B60L 53/22** (2019.01)
**H02J 3/46** (2026.01)    **B60L 53/63** (2019.01)

(52) Cooperative Patent Classification (CPC):
**H02J 7/35; B60L 53/22; B60L 53/60; B60L 53/62; B60L 53/63; H02J 1/102; H02J 3/46; H02J 7/02; H02J 7/342;** B60L 53/11; B60L 53/14; B60L 53/51; B60L 53/53; B60L 2210/10; B60L 2210/30;   (Cont.)

(86) International application number:
**PCT/KR2022/012831**

(87) International publication number:
**WO 2023/027557 (02.03.2023 Gazette 2023/09)**

(54) **HYBRID CHARGING DEVICE FOR ELECTRIC VEHICLE, CHARGING SYSTEM COMPRISING THE SAME, AND CHARGING METHOD USING THE SAME**

HYBRIDLADEVORRICHTUNG FÜR ELEKTROFAHRZEUG, LADESYSTEM DAMIT UND LADEVERFAHREN DAMIT

DISPOSITIF DE CHARGE HYBRIDE POUR VÉHICULE ÉLECTRIQUE, SYSTÈME DE CHARGE LE COMPRENANT, ET PROCÉDÉ DE CHARGE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2021   KR 20210113530**

(43) Date of publication of application:
**08.11.2023   Bulletin 2023/45**

(73) Proprietor: **LG Energy Solution, Ltd.**
**Seoul 07335 (KR)**

(72) Inventors:
• **YOON, Seung-Kyu**
**Daejeon 34122 (KR)**
• **HAN, Ho-Seung**
**Daejeon 34122 (KR)**
• **SHIN, Young-joon**
**Daejeon 34122 (KR)**

(74) Representative: **Plasseraud IP**
**104 Rue de Richelieu**
**CS92104**
**75080 Paris Cedex 02 (FR)**

(56) References cited:
EP-A1- 3 029 804      JP-A- 2013 110 871
JP-A- 2020 188 564    JP-B1- 6 266 187
KR-B1- 101 096 578    US-A1- 2013 049 689
US-A1- 2014 320 084   US-A1- 2021 013 734

(52) Cooperative Patent Classification (CPC): (Cont.)
H02J 3/32; H02J 3/381; H02J 2207/20;
H02J 2207/40; H02J 2300/24; H02J 2310/48;
Y02T 10/70; Y02T 10/7072; Y02T 90/12

**Description**

TECHNICAL FIELD

The present application claims the benefit of Korean Patent Application No. 10-2021-0113530 filed on August 26, 2021 with the Korean Intellectual Property Office.

The present disclosure relates to hybrid charging technology for electric vehicles, and more particularly, to charge power generation for electric vehicles from the simultaneous supply of alternating current input power and direct current input power.

BACKGROUND ART

Recently, as regulations concerning exhaust gas emissions from ignition engine vehicles are globally applied and a variety of policies to promote electric vehicle deployment are developed, electric vehicle related technology is growing fast.

In the future, the key factor for sustainable growth in the electric vehicle market is the charging rate. In general, chargers for electric vehicles are designed to convert alternating current (AC) power from AC power supply such as AC power grids at home to direct current (DC) power suitable for electric vehicles and supply the DC power to the electric vehicles.

However, a non-negligible level of power loss occurs in the process of converting AC power to DC power, and moreover, only AC power is insufficient to generate the charge power of DC voltage level required for electric vehicles.

Examples and embodiments from prior art are presented in the documents US 2014/320084 A1, EP 3 029 804 A1, and US 2013/049689 A1.

DISCLOSURE

Technical Problem

The present disclosure is designed to solve the above-described problem, and therefore the present disclosure is directed to providing a charging device for generating charge power for electric vehicles from the simultaneous supply of alternating current (AC) input power from AC power supply and direct current (DC) input power from DC power supply, a charging system comprising the charging device and a charging method using the charging device.

These and other objectives and advantages of the present disclosure may be understood by the following description and will be apparent from an embodiment of the present disclosure. In addition, it will be readily understood that the objectives and advantages of the present disclosure may be realized by the means set forth in the appended claims and a combination thereof.

Technical Solution

A hybrid charging device according to claim 1 is provided in a first aspect.

The power combiner may be configured to combine the first DC power with the second DC power to generate the charge power for the electric vehicle when the first DC power and the second DC power are simultaneously inputted.

A charging system according to claim 3 is provided in another aspect of the present disclosure.

The power combiner may be configured to combine the first DC power with the second DC power to generate the charge power for the electric vehicle when the first DC power and the second DC power are simultaneously inputted.

A charging method according to claim 5 is provided in still another aspect of the present disclosure.

The step of generating the charge power for the electric vehicle may include combining the first DC power with the second DC power to generate the charge power when the first DC power and the second DC power are simultaneously inputted.

Advantageous Effects

According to at least one of the embodiments of the present disclosure, it is possible to generate the charge power for electric vehicles from the simultaneous supply of alternating current (AC) input power from AC power supply and direct current (DC) input power from DC power supply. Accordingly, in the charge power generation for electric vehicles, it is possible to achieve fast charging compared to the use of AC input power only, thereby reducing the charging time for electric vehicles.

According to at least one of the embodiments of the present disclosure, it is possible to reduce the power loss in the power conversion process and stably maintain the charge power generation by controlling the degree of contribution (share level) of each of the AC-DC converter that receives the AC input power and the DC-DC converter that receives the DC input power to the charge power according to the operating condition of each of the AC-DC converter and the DC-DC converter.

The effects of the present disclosure are not limited to the above-mentioned effects, and these and other effects will be clearly understood by those skilled in the art from the charge controller may be configured to determine a second allowable output power of the DC-DC converter based on the operating condition of the DC-DC converter. The charge controller may be configured to set the power value of the first DC power and the power value of the second DC power to make a ratio between the first DC power and the second DC power equal to a ratio between the first allowable output power and the second allowable output power when a sum of the first allowable output power and the second allowable output power is equal to or greater than the target power.

A charging method using a hybrid charging device including an AC-DC converter, a DC-DC converter and a power combiner according to still another aspect of the present disclosure includes controlling the AC-DC converter to convert an AC input power to a first DC power; controlling the DC-DC converter to convert a DC input power to a second DC power; and controlling the power combiner to generate a charge power for an electric vehicle from at least one of the first DC power or the second DC power.

The step of generating the charge power for the electric vehicle may include combining the first DC power with the second DC power to generate the charge power when the first DC power and the second DC power are simultaneously inputted.

The charging method using the hybrid charging device may further include setting a target power from a charge request from the electric vehicle; and setting a power value of the first DC power and a power value of the second DC power to make the charge power equal to the target power based on an operating condition of each of the AC-DC converter and the DC-DC converter.

The step of setting the power value of the first DC power and the power value of the second DC power may include determining a first allowable output power of the AC-DC converter based on the operating condition of the AC-DC converter; determining a second allowable output power of the DC-DC converter based on the operating condition of the DC-DC converter; and setting the power value of the first DC power and the power value of the second DC power to make a ratio between the first DC power and the second DC power equal to a ratio between the first allowable output power and the second allowable output power when a sum of the first allowable output power and the second allowable output power is equal to or greater than the target power.

Advantageous Effects

According to at least one of the embodiments of the present disclosure, it is possible to generate the charge power for electric vehicles from the simultaneous supply of alternating current (AC) input power from AC power supply and direct current (DC) input power from DC power supply. Accordingly, in the charge power generation for electric vehicles, it is possible to achieve fast charging compared to the use of AC input power only, thereby reducing the charging time for electric vehicles.

According to at least one of the embodiments of the present disclosure, it is possible to reduce the power loss in the power conversion process and stably maintain the charge power generation by controlling the degree of contribution (share level) of each of the AC-DC converter that receives the AC input power and the DC-DC converter that receives the DC input power to the charge power according to the operating condition of each of the AC-DC converter and the DC-DC converter.

The effects of the present disclosure are not limited to the above-mentioned effects, and these and other effects will be clearly understood by those skilled in the art from the appended claims.

DESCRIPTION OF DRAWINGS

The accompanying drawings illustrate an exemplary embodiment of the present disclosure, and together with the detailed description of the present disclosure as described below, serve to provide a further understanding of the technical aspects of the present disclosure, and thus the present disclosure should not be construed as being limited to the drawings.

FIG. 1 is a diagram exemplarily showing the architecture of a charging system according to the present disclosure.
FIG. 2 is a diagram referenced in describing an optimal power curve used by a hybrid charging device shown in FIG. 1.
FIG. 3 is a flowchart exemplarily showing a charging method using a hybrid charging device according to a first embodiment of the present disclosure.
FIGS. 4 and 5 are flowcharts exemplarily showing a charging method using a hybrid charging device according to a second embodiment of the present disclosure.

BEST MODE

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just an exemplary embodiment of the present disclosure, but not intended to fully describe the technical aspects of the present disclosure, so it should be understood that a variety of other equivalents and modifications could have been made thereto at the time that the application was filed.

The terms including the ordinal number such as "first", "second" and the like, are used to distinguish one element from another among various elements, but not intended to limit the elements.

Unless the context clearly indicates otherwise, it will be understood that the term "comprises" when used in this specification, specifies the presence of stated elements, but does not preclude the presence or addition of one or more other elements. Additionally, the term "unit" as used herein refers to a processing unit of at least one function or operation, and may be implemented in hardware and software either alone or in combination.

In addition, throughout the specification, it will be further understood that when an element is referred to as being "connected to" another element, it can be directly connected to the other element or intervening elements may be present.

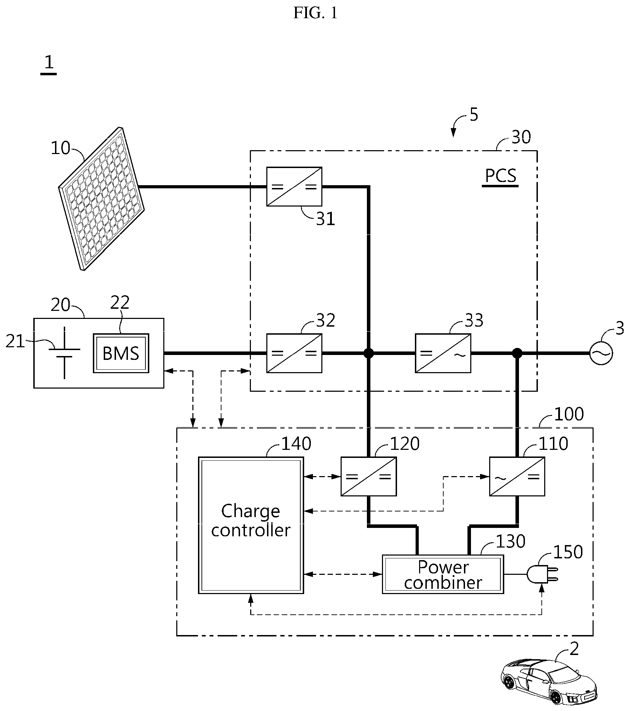

FIG. 1 is a diagram exemplarily showing the architecture of a charging system according to the present disclosure.

Referring to FIG. 1, the charging system 1 is provided to generate DC charge power for an electric vehicle 2 by a so-called hybrid charging method which is a combination of alternating current (AC) charging and direct current (DC) charging.

The charging system 1 includes a power system 5 and a hybrid charging device 100.

The power system 5 includes a solar panel 10, an energy storage system 20 and a power conversion system (PCS) 30.

The solar panel 10 converts solar energy to DC power. All the DC power generated from the solar panel 10 is supplied to the PCS 30.

The energy storage system 20 includes at least one secondary battery 21 and a battery management system (BMS) 22.

The PCS 30 assumes a combination of an AC power supply function and a DC power supply function, and may be referred to as a 'hybrid inverter'. The PCS 30 may include a unidirectional DC-DC converter 31, a bidirectional DC-DC converter 32 and a bidirectional DC-AC inverter 33. The unidirectional DC-DC converter 31 may convert the voltage level of the DC input power from the solar panel 10 to DC power of a different voltage level for the energy storage system 20. The bidirectional DC-DC converter 32 may charge the secondary battery 21 included in the energy storage system 20 by controlling the voltage level of the DC power supplied from the unidirectional DC-DC converter 31 and/or the bidirectional DC-AC inverter 33. The bidirectional DC-AC inverter 33 may convert the DC input power from the unidirectional DC-DC converter 31 and/or the bidirectional DC-DC converter 32 to AC and supply (sell) the AC power to an AC power grid 3 or supply the AC power to the hybrid charging device 100. For example, in case that all the DC power of the solar panel 10 is 14 [kW(kilowatt)], the PCS 30 may convert some (for example, 8 [kW]) of the 14 [kW] DC power to DC and the others (for example, 6 [kW]) to AC.

The bidirectional DC-DC converter 32 may discharge the energy storage system 20 and input the DC power to the bidirectional DC-AC inverter 33. The bidirectional DC-AC inverter 33 may convert the AC input power from the AC power grid 3 to DC and input the DC power to the bidirectional DC-DC converter 32.

The BMS 22 is configured to monitor the operating condition (for example, voltage, current, temperature and state of charge (SOC)) of the secondary battery 21. The BMS 22 may communicate with at least one of the PCS 30 or the hybrid charging device 100, and controls the charge/discharge of the secondary battery 21 based on data acquired via communication. In an example, in a standby mode in which the hybrid charging device 100 stops generating the charge power for the electric vehicle 2, the BMS 22 determines if it is necessary to charge the secondary battery 21 according to the operating condition of the secondary battery 21. When the BMS 22 determines that the secondary battery 21 needs charging, the BMS 22 transmits a charge request to the PCS 30. In response to the charge request from the BMS 22, the PCS 30 generates the charge power for the secondary battery 21 from at least one of the AC power from the AC power grid 3 or the DC power from the solar panel 10 and supplies the charge power to the energy storage system 20.

Among all the AC power generated by the PCS 30, the power that contributes to the charge power generation for the electric vehicle 2 is referred to as 'AC input power'. Among all the DC power generated by the PCS 30, the power that contributes to the charge power generation for the electric vehicle 2 is referred to as 'DC input power'.

The hybrid charging device 100 includes an AC-DC converter 110, a DC-DC converter 120, a power combiner 130 and a charge controller 140. The hybrid charging device 100 may further include a charging connector 150. The charging connector 150 may be detachably provided from the body of the hybrid charging device 100.

The AC-DC converter 110 is configured to convert the AC input power to first DC power. In an example, when 7 [kW] AC power from the AC power grid 3 and 7 [kW] AC power from the PCS 30 is supplied to the hybrid charging device 100, the AC input power is 14 [kW]. Specifically, the input terminal of the AC-DC converter 110 is connected to the AC output terminal of the PCS 30 and the AC power grid 3, and the output terminal of the AC-DC converter 110 is connected to the input terminal of the power combiner 130. The first DC power is used to generate the charge power for the electric vehicle 2, and has a predetermined voltage level or current level.

The DC-DC converter 120 is configured to convert the DC input power to second DC power. In an example, when 7 [kW] DC power from the energy storage system 20 and 7 [kW] DC power from the PCS 30 is supplied to the hybrid charging device 100, the DC input power is 14 [kW]. Specifically, the input terminal of the DC-DC converter 120 is connected to the DC output terminal of the PCS 30, and the output terminal of the DC-DC converter 120 is connected to the input terminal of the power combiner 130. The second DC power is also used to generate the charge power for the electric vehicle 2, and has a predetermined voltage level or current level.

The output terminal of each of the AC-DC converter 110 and the DC-DC converter 120 is connected in parallel to the power combiner 130. The power combiner 130 is configured to combine the first DC power from the AC-DC converter 110 with the second DC power from the DC-DC converter 120 to generate the charge power for the electric vehicle 2. Of course, when any one of the AC-DC converter 110 and the DC-DC converter 120 is in a standby mode, the power combiner 130 may generate the charge power for the electric vehicle 2 using only the DC power from the other one of the AC-DC converter 110 and the DC-DC converter 120 in operation mode. The power combiner 130 may prevent the countercurrent flow between the first DC power and the second DC power, reduce a voltage difference that may exist between the two, and regulate the current level of each of the first DC power and the second DC power as per request from the charge controller 140. The power combiner 130 may include, for example, a load sharing IC.

The charge controller 140 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors or electrical units for performing the other functions. Memory may be embedded in the charge controller 140. The memory may include, for example, at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory may store data and programs required for the computational operation by the charge controller 140.

The charge controller 140 controls the operation of each of the AC-DC converter 110, the DC-DC converter 120 and the power combiner 130. The charging connector 150 relays the communication with the charge power between the electric vehicle 2 and the hybrid charging device 100. The charging connector 150 has a communication line, and the communication circuit of the charge controller 140 may perform bidirectional communication with the electric vehicle 2 through the communication line of the charging connector 150. The charge controller 140 may receive the charge request from the electric vehicle 2 through the charging connector 150 connected to the electric vehicle 2. The communication circuit is configured to support wired or wireless communication between the charge controller 140 and the electric vehicle 2. The wired communication may be, for example, controller area network (CAN) communication, and the wireless communication may be, for example, Zigbee or Bluetooth communication. Of course, the communication protocol is not limited to a particular type and may include any type of communication protocol that supports wired/wireless communication between the charge controller 140 and the electric vehicle 2.

Additionally, the communication circuit of the charge controller 140 may be responsible for communication with at least one of the energy storage system 20 or the PCS 30. The charge controller 140 may communicate with any one of the energy storage system 20 and the PCS 30 using the other one as relay. In an example, the charge controller 140 may transmit a charging start command to the BMS 22 in response to the charge request from the electric vehicle 2, and the BMS 22 may transmit the charging start command to the PCS 30. In another example, in response to the charge request from the electric vehicle 2, the charge controller 140 may transmit the charging start command to the PCS 30, and the PCS 30 may transmit the charging start command to the BMS 22. In response to the charging start command, the PCS 30 may stop charging/discharging the secondary battery 21, and when the solar panel 10 is in operation, may convert the DC power from the solar panel 10 to AC and supply the AC power to the AC-DC converter 110.

While the electric vehicle 2 is being charged, the electric vehicle 2 may periodically or aperiodically change the charge request according to the charging situation of a battery pack in the electric vehicle 2. The charge request may include data indicating a desired voltage level and/or a desired current level of the charge power according to a preset charging protocol for the electric vehicle 2. The charge controller 140 may set target power, i.e., the charge power required by the electric vehicle 2 from the charge request from the electric vehicle 2. In an example, the target power may be equal to the multiplication of the desired voltage level and the desired current level of the charge request received latest from the electric vehicle 2. The charge controller 140 may control the first DC power and the second DC power to make the charge power generated by the power combiner 130 equal to the target power based on the operating condition of each of the AC-DC converter 110 and the DC-DC converter 120.

The charge controller 140 may monitor the operating condition of each of the AC-DC converter 110 and the DC-DC converter 120. The operating condition may be determined from the measurable parameter(s) that relies on the operational performance (for example, power convert efficiency) such as temperature, input voltage and input current. The charge controller 140 may score the operating condition of each of the AC-DC converter 110 and the DC-DC converter 120 and control the AC-DC converter 110 and the DC-DC converter 120 according to the scored operating condition.

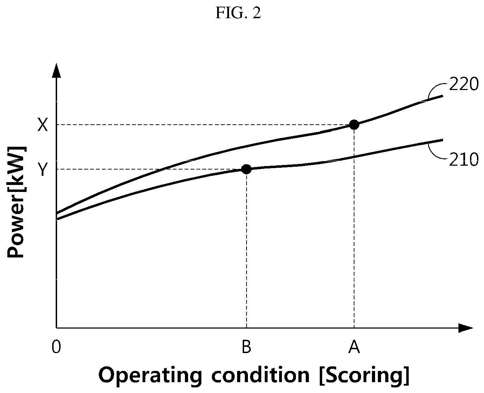

FIG. 2 is a diagram referenced in describing an optimal power curve used by the hybrid charging device 100 shown in FIG. 1. FIG. 2 illustrates the operating condition scoring of each of the AC-DC converter 110 and the DC-DC converter 120 in the range of 0 to 100.

While the electric vehicle 2 is being charged, the charge controller 140 may determine first allowable output power of the first DC power corresponding to the scored operating condition of the AC-DC converter 110 using a first optimal power curve 210. Additionally, while the electric vehicle 2 is being charged, the charge controller 140 may determine second allowable output power of the second DC power corresponding to the scored operating condition of the DC-DC converter 120 using a second optimal power curve 220. The first optimal power curve 210 is a preset map or function as a relationship between the operating condition and the first allowable output power of the AC-DC converter 110, and the second optimal power curve 220 is a preset map or function as a relationship between the operating condition and the second allowable output power of the DC-DC converter 120. In an example, when the scored operating condition of the AC-DC converter 110 is A and the scored operating condition of the DC-DC converter 120 is B at a specific time during the charge of the electric vehicle 2, the first allowable output power is determined to be X [kW] and the second allowable output power is determined to be Y [kW]. The charge controller 140 may regulate the first DC power and the second DC power to make them equal to or less than the first allowable output power and the second allowable output power, respectively, to protect the AC-DC converter 110 and the DC-DC converter 120 from overloads.

The charge controller 140 may determine the magnitude of the first DC power to be requested to the AC-DC converter 110 and the magnitude of the second DC power to be requested to the DC-DC converter 120 by comparing the sum of the first allowable output power and the second allowable output power with the target power.

When the sum of the first allowable output power and the second allowable output power is equal to or more than the target power, the charge controller 140 may control the first DC power and the second DC power to make a ratio between the first DC power and the second DC power equal to a ratio between the first allowable output power and the second allowable output power. That is, the target power, the first allowable output power, the second allowable output power, the first DC power and the second DC power may meet the conditions according to the following Equations 1 and 2.

First DC power = (First allowable output power × Target power)/(First allowable output power + Second allowable output power)     <Equation 1>

Second DC power = (Second allowable output power × Target power)/(First allowable output power + Second allowable output power)     <Equation 2>

When the sum of the first allowable output power and the second allowable output power is less than the target power, the charge controller 140 may set the first DC power and the second DC power to make them equal to the first allowable output power and the second allowable output power, respectively.

While the electric vehicle 2 is being charged, the charge controller 140 may monitor the AC input power through the input terminal of the AC-DC converter 110 and the DC input power through the input terminal of the DC-DC converter 120.

When the AC input power is equal to or more than the first allowable output power and the DC input power is less than the second allowable output power, the charge controller 140 may transmit a first power control command to the PCS 30 to reduce the AC input power and increase the DC input power. In response to the first power control command, among all the DC power of the solar panel 10, the PCS 30 may increase the DC power supplied to the bidirectional DC-DC converter 32 by a reference value and reduce the DC power supplied to the bidirectional DC-AC inverter 33 by the reference value.

When the AC input power is less than the first allowable output power and the DC input power is more than the second allowable output power, the charge controller 140 may transmit a second power control command to the PCS 30 to increase the AC input power and reduce the DC input power. In response to the second power control command, among all the DC power of the solar panel 10, the PCS 30 may reduce the DC power supplied to the bidirectional DC-DC converter 32 by the reference value and increase the DC power supplied to the bidirectional DC-AC inverter 33 by the reference value.

The reference value may be equal to a smaller one of a difference between the AC input power and the first allowable output power and a difference between the DC input power and the second allowable output power.

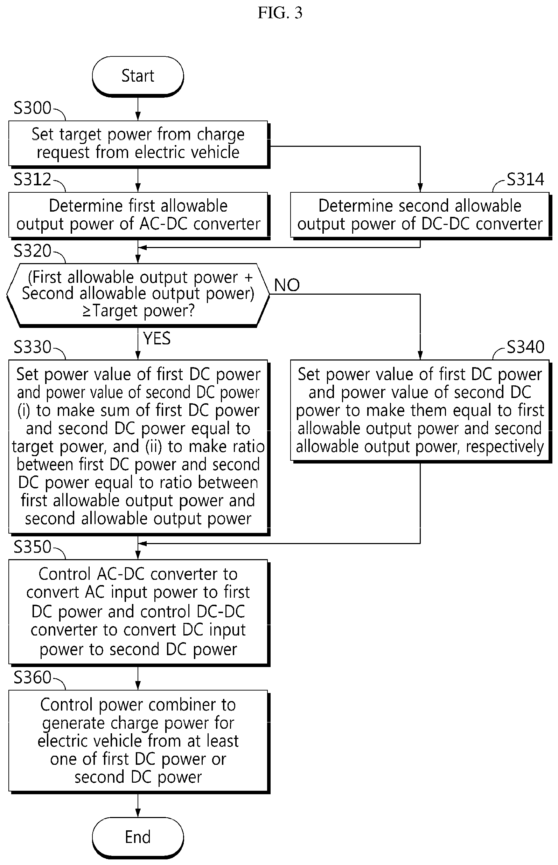

FIG. 3 is a flowchart exemplarily showing a charging method using the hybrid charging device 100 according to a first embodiment of the present disclosure. The method of FIG. 3 may be performed in response to the charge request from the electric vehicle 2 being received by the hybrid charging device 100 through the charging connector 150.

Referring to FIGS. 1 to 3, in step S300, the charge controller 140 sets the target power from the charge request from the electric vehicle 2.

In step S312, the charge controller 140 determines the first allowable output power of the AC-DC converter 110.

In step S314, the charge controller 140 determines the second allowable output power of the DC-DC converter 120.

In step S320, the charge controller 140 determines if the sum of the first allowable output power and the second allowable output power is equal to or greater than the target power. When a value of the step S320 is "YES", step S330 is performed. When the value of the step S320 is "NO", step S340 is performed.

In the step S330, the charge controller 140 sets a power value of the first DC power and a power value of the second DC power (i) to make the sum of the first DC power and the second DC power equal to the target power, and (ii) to make the ratio between the first DC power and the second DC power equal to the ratio between the first allowable output power and the second allowable output power.

In the step S340, the charge controller 140 sets the power value of the first DC power and the power value of the second DC power to make them equal to the first allowable output power and the second allowable output power, respectively.

In step S350, the charge controller 140 controls the AC-DC converter 110 to convert the AC input power to the first DC power and controls the DC-DC converter 120 to convert the DC input power to the second DC power. That is, the AC-DC converter 110 generates the first DC power according to the power value set by the charge controller 140 in the step S330 or S340. The DC-DC converter 120 generates the second DC power according to the power value set by the charge controller 140 in the step S330 or S340.

In step S360, the charge controller 140 controls the power combiner 130 to generate the charge power for the electric vehicle 2 from at least one of the first DC power or the second DC power. When the first DC power and the second DC power are simultaneously inputted, the charge power generated by the power combiner 130 is equal to the sum of the first DC power and the second DC power.

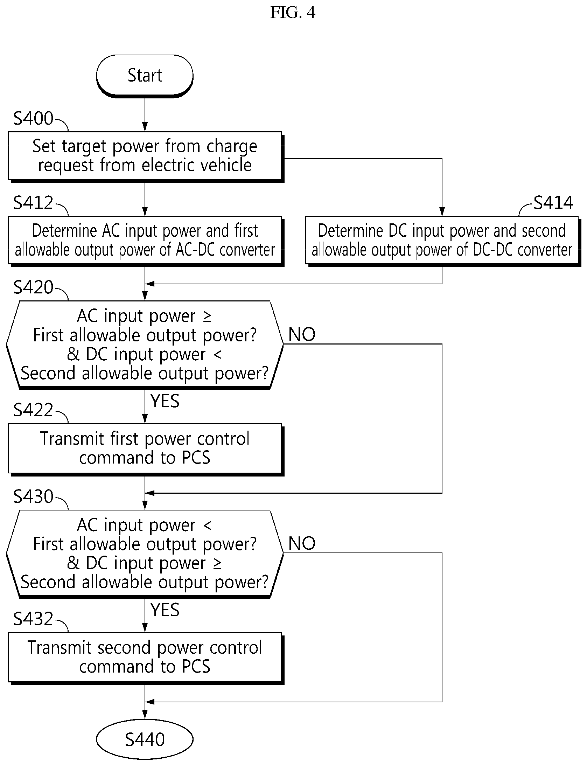

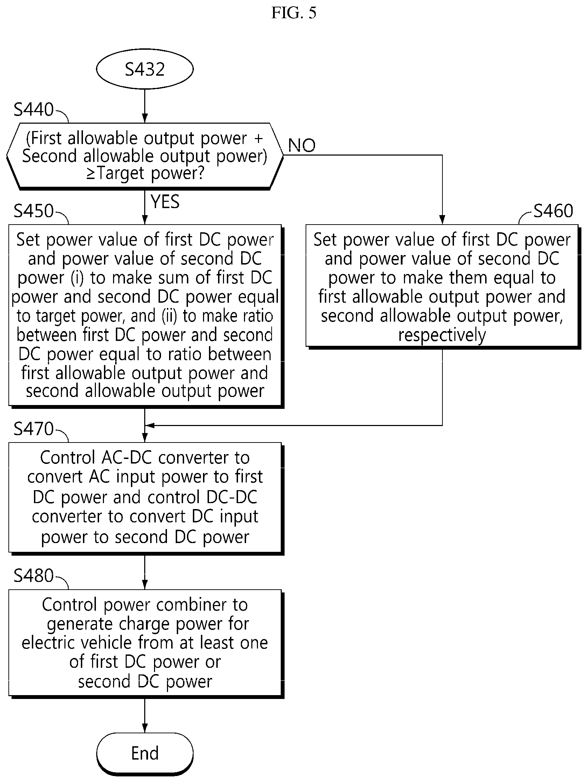

FIGS. 4 and 5 are flowcharts exemplarily showing a charging method using the hybrid charging device 100 according to a second embodiment of the present disclosure. The method of FIG. 4 may be performed in response to the charge request from the electric vehicle 2 being received by the hybrid charging device 100 through the charging connector 150.

Referring to FIGS. 1, 2 and 4, in step S400, the charge controller 140 sets the target power from the charge request from the electric vehicle 2.

In step S412, the charge controller 140 determines the AC input power and the first allowable output power of the AC-DC converter 110.

In step S414, the charge controller 140 determines the DC input power and the second allowable output power of the DC-DC converter 120.

In step S420, the charge controller 140 determines if the AC input power is equal to or greater than the first allowable output power and the DC input power is less than the second allowable output power. When a value of the step S420 is "YES", step S422 is performed.

In the step S422, the charge controller 140 transmits the first power control command to the PCS 30. In response to the first power control command, the PCS 30 reduces the AC input power and increases the DC input power.

In step S430, the charge controller 140 determines if the AC input power is less than the first allowable output power and the DC input power is equal to or greater than the second allowable output power. When a value of the step S430 is "YES", step S432 is performed.

In the step S432, the charge controller 140 transmits the second power control command to the PCS 30. In response to the second power control command, the PCS 30 increases the AC input power and reduces the DC input power.

In step S440, the charge controller 140 determines if the sum of the first allowable output power and the second allowable output power is equal to or greater than the target power. When a value of the step S440 is "YES", step S450 is performed. When the value of the step S440 is "NO", step S460 is performed.

In the step S450, the charge controller 140 sets the power value of the first DC power and the power value of the second DC power (i) to make the sum of the first DC power and the second DC power equal to the target power, and (ii) to make the ratio between the first DC power and the second DC power equal to the ratio between the first allowable output power and the second allowable output power.

In the step S460, the charge controller 140 sets the power value of the first DC power and the power value of the second DC power to make them equal to the first allowable output power and the second allowable output power, respectively.

In step S470, the charge controller 140 controls the AC-DC converter 110 to convert the AC input power to the first DC power, and controls the DC-DC converter 120 to convert the DC input power to the second DC power.

In step S480, the charge controller 140 controls the power combiner 130 to generate the charge power for the electric vehicle 2 from at least one of the first DC power or the second DC power. When the first DC power and the second DC power are simultaneously inputted, the charge power generated by the power combiner 130 is equal to the sum of the first DC power and the second DC power.

The embodiments of the present disclosure described hereinabove are not implemented only through the apparatus and method, and may be implemented through programs that perform the functions corresponding to the configurations of the embodiments of the present disclosure or recording media having the programs recorded thereon, and such implementation may be easily achieved by those skilled in the art from the disclosure of the embodiments described above.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the equivalent scope of the appended claims.

Additionally, as many substitutions, modifications and changes may be made to the present disclosure described hereinabove by those skilled in the art without departing from the technical aspects of the present disclosure, the present disclosure is not limited by the above-described embodiments and the accompanying drawings, and all or some of the embodiments may be selectively combined to allow various modifications.

(Description of Reference Numerals)

| 1: | Charging system | 2: | Electric vehicle |
|---|---|---|---|
| 3: | AC power grid | 10: | Solar panel |
| 20: | Energy storage system | 30: | Power conversion system |
| 100: | Hybrid charging device | | |
| 110: | AC-DC converter | 120: | DC-DC converter |
| 130: | Power combiner | 140: | Charge controller |

**Claims**

1. A hybrid charging device (100) for an electric vehicle **characterized in that** the hybrid charging device comprises:

   an alternating current -direct current, AC-DC, converter (110), configured to convert an alternating current, AC, input power supplied from at least one of a power conversion system (30) and an AC power grid (3) to a first direct current, DC, power ;
   a DC-DC converter (120) configured to convert a DC input power supplied from the power conversion system to a second DC power;
   a power combiner (130) configured to generate a charge power for the electric vehicle from at least one of the first DC power or the second DC power; and
   a charge controller (140) configured to control the AC-DC converter, the DC-DC converter and the power combiner,
   wherein the charge controller is configured to:

   set a target power from a charge request from the electric vehicle,
   determine a first allowable output power of the AC-DC converter based on an operating condition of the AC-DC converter,
   determine a second allowable output power of the DC-DC converter based on an operating condition of the DC-DC converter,
   when a sum of the first allowable output power and the second allowable output power is equal to or greater than the target power, set a power value of the first DC power and a power value of the second DC power so that (i) the charge power being equal to the target power and (ii) a ratio between the first DC power and the second DC power being equal to a ratio between the first allowable output power and the second allowable output power, and control the power combiner to generate the charge power for the electric vehicle from at least one of the first DC power and the second DC power.

2. The hybrid charging device according to claim 1, wherein the power combiner is configured to combine the first DC power with the second DC power to generate the charge power for the electric vehicle when the first DC power and the second DC power are simultaneously inputted.

3. A charging system (1) **characterized in that** the charging system comprises:

   a power system (5) including a solar panel, an energy storage system and a power conversion system (30), the power system connected to an AC power grid; and
   a hybrid charging device (100) according to claims 1 and 2.

4. A charging method using a hybrid charging device including an alternating current -direct current, AC-DC, converter, a DC-DC converter and a power combiner, the charging method comprising:

   setting (S300) a target power from a charge request from an electric vehicle;
   determining (S312) a first allowable output power of the AC-DC converter based on an operating condition of the AC-DC converter;
   determining (S314) a second allowable output power of the DC-DC converter based on an operating condition of the DC-DC converter;
   controlling (S350) the AC-DC converter to convert an AC input power supplied from at least one of a power conversion system (30) and an AC power grid (3) to a first DC power;
   controlling (S350) the DC-DC converter to convert a DC input power supplied from the power conversion system to a second DC power; and
   controlling (S360) the power combiner to generate the charge power for the electric vehicle from at least one of the first DC power or the second DC power,
   wherein the charging method further comprise:
   when a sum of the first allowable output power and the second allowable output power is equal to or greater than the target power, setting (S330) a power value of the first DC power and a power value of the second DC power so that (i) the charge power being equal to the target power and (ii) a ratio between the first DC power and the second DC power being equal to a ratio between the first allowable output power and the second allowable output power.

5. The charging method according to claim 4, wherein generating the charge power for the electric vehicle comprises combining the first DC power with the second DC power to generate the charge power when the first DC power and the second DC power are simultaneously inputted.

**Patentansprüche**

1. Hybride Ladevorrichtung (100) für ein elektrisches Fahrzeug, **dadurch gekennzeichnet, dass** die hybride Ladevorrichtung umfasst:

   einen Wechselstrom-Gleichstrom-, AC-DC-, Wandler (110) welcher dazu eingerichtet ist, eine Wechselstrom-, AC-, Eingangsleistung, welche von wenigstens einem aus einem Leistungswandlungssystem (30) und einem AC-Leistungsnetz (3) geliefert wird, in eine erste Gleichstrom-, DC-, Leistung umzuwandeln;
   einen DC-DC-Wandler (120), welcher dazu eingerichtet ist, eine DC-Eingangsleistung, welche von dem Leistungswandlungssystem geliefert wird, in eine zweite DC-Leistung umzuwandeln;
   einen Leistungskombinierer (130), welcher dazu eingerichtet ist, eine Ladeleistung für das elektrische Fahrzeug aus wenigstens einem aus der ersten DC-Leistung oder der zweiten DC-Leistung zu generieren; und
   eine Ladesteuereinheit (140), welche dazu eingerichtet ist, den AC-DC-Wandler, den DC-DC-Wandler und den Leistungskombinierer zu steuern,
   wobei die Ladesteuereinheit dazu eingerichtet ist:

   eine Zielleistung aus einer Ladeanfrage von dem elektrischen Fahrzeug festzulegen,
   eine erste zulässige Ausgangsleistung des AC-DC-Wandlers auf Grundlage einer Betriebsbedingung des

# EP 4 272 992 B1

AC-DC-Wandlers zu bestimmen,
eine zweite zulässige Ausgangsleistung des DC-DC-Wandlers auf Grundlage einer Betriebsbedingung des DC-DC-Wandlers zu bestimmen,
wenn eine Summe der ersten zulässigen Ausgangsleistung und der zweiten zulässigen Ausgangsleistung gleich wie oder größer als die Zielleistung ist, einen Leistungswert der ersten DC-Leistung und einen Leistungswert der zweiten DC-Leistung festzulegen, so dass (i) die Ladeleistung gleich der Zielleistung ist und (ii) ein Verhältnis zwischen der ersten DC-Leistung und der zweiten DC-Leistung gleich einem Verhältnis zwischen der ersten zulässigen Ausgangsleistung und der zweiten zulässigen Ausgangsleistung ist, und den Leistungskombinierer zu steuern, um die Ladeleistung für das elektrische Fahrzeug aus wenigstens einer aus der ersten DC-Leistung und der zweiten DC-Leistung zu generieren.

2. Hybride Ladevorrichtung nach Anspruch 1, wobei der Leistungskombinierer dazu eingerichtet ist, die erste DC-Leistung mit der zweiten DC-Leistung zu kombinieren, um die Ladeleistung für das elektrische Fahrzeug zu generieren, wenn die erste DC-Leistung und die zweite DC-Leistung gleichzeitig eingegeben werden.

3. Ladesystem (1), **dadurch gekennzeichnet, dass** das Ladesystem umfasst:

ein Leistungssystem (5), welches ein Solarpanel, ein Energiespeichersystem und ein Leistungswandlungssystem (30) umfasst, wobei das Leistungssystem mit einem AC-Leistungsnetz verbunden ist; und
eine hybride Ladevorrichtung (100) nach einem der Ansprüche 1 und 2.

4. Ladeverfahren unter Verwendung einer hybriden Ladevorrichtung, umfassend einen Wechselstrom-Gleichstrom-, AC-DC-, Wandler, einen DC-DC-Wandler und einen Leistungskombinierer, wobei das Ladeverfahren umfasst:

Festlegen (S300) einer Zielleistung aus einer Ladeanfrage von einem elektrischen Fahrzeug,
Bestimmen (S312) einer ersten zulässigen Ausgangsleistung des AC-DC-Wandlers auf Grundlage einer Betriebsbedingung des AC-DC-Wandlers,
Bestimmen (S314) einer zweiten zulässigen Ausgangsleistung des DC-DC-Wandlers auf Grundlage einer Betriebsbedingung des DC-DC-Wandlers,
Steuern (S350) des AC-DC-Wandlers, um eine AC-Eingangsleistung, welche von wenigstens einem aus einem Leistungswandlungssystem (30) und einem AC-Leistungsnetz (3) geliefert wird, in eine erste DC-Leistung umzuwandeln;
Steuern (S350) des DC-DC-Wandlers, um eine DC-Eingangsleistung, welche von dem Leistungswandlungssystem geliefert wird, in eine zweite DC-Leistung umzuwandeln; und
Steuern (S360) des Leistungskombinierers, um die Ladeleistung für das elektrische Fahrzeug aus wenigstens einem aus der ersten DC-Leistung oder der zweiten DC-Leistung zu generieren,
wobei das Ladeverfahren ferner umfasst:
wenn eine Summe der ersten zulässigen Ausgangsleistung und der zweiten zulässigen Ausgangsleistung gleich wie oder größer als die Zielleistung ist, Festlegen (S330) eines Leistungswerts der ersten DC-Leistung und eines Leistungswerts der zweiten DC-Leistung, so dass (i) die Ladeleistung gleich der Zielleistung ist und (ii) ein Verhältnis zwischen der ersten DC-Leistung und der zweiten DC-Leistung gleich einem Verhältnis zwischen der ersten zulässigen Ausgangsleistung und der zweiten zulässigen Ausgangsleistung ist.

5. Ladeverfahren nach Anspruch 4, wobei das Generieren der Ladeleistung für das elektrische Fahrzeug ein Kombinieren der ersten DC-Leistung mit der zweiten DC-Leistung umfasst, um die Ladeleistung für das elektrische Fahrzeug zu generieren, wenn die erste DC-Leistung und die zweite DC-Leistung gleichzeitig eingegeben werden.

**Revendications**

1. Dispositif de charge hybride (100) pour un véhicule électrique, **caractérisé en ce que** le dispositif de charge hybride comprend :

un convertisseur (110) de courant alternatif-courant continu, CA-CC, configuré pour convertir une puissance d'entrée en courant alternatif, CA, fournie par au moins l'un parmi un système de conversion de puissance (30) et un réseau électrique CA (3) en une première puissance en courant continu, CC ;
un convertisseur CC-CC (120) configuré pour convertir une puissance d'entrée CC fournie par le système de conversion de puissance en une seconde puissance CC ;

11

un combinateur de puissance (130) configuré pour générer une puissance de charge pour le véhicule électrique à partir d'au moins l'une parmi la première puissance CC ou la seconde puissance CC ; et

un dispositif de commande de charge (140) configuré pour commander le convertisseur CA-CC, le convertisseur CC-CC et le combinateur de puissance,

dans lequel le dispositif de commande de charge est configuré pour :

paramétrer une puissance cible à partir d'une demande de charge provenant du véhicule électrique,

déterminer une première puissance de sortie admissible du convertisseur CA-CC sur la base d'une condition de fonctionnement du convertisseur CA-CC,

déterminer une seconde puissance de sortie admissible du convertisseur CC-CC sur la base d'une condition de fonctionnement du convertisseur CC-CC,

lorsqu'une somme de la première puissance de sortie admissible et de la seconde puissance de sortie admissible est égale ou supérieure à la puissance cible, paramétrer valeur de puissance de la première puissance CC et une valeur de puissance de la seconde puissance CC de sorte que (i) la puissance de charge est égale à la puissance cible et (ii) un rapport entre la première puissance CC et la seconde puissance CC est égal à un rapport entre la première puissance de sortie admissible et la seconde puissance de sortie admissible, et commander le combinateur de puissance pour générer la puissance de charge pour le véhicule électrique à partir d'au moins l'une parmi la première puissance CC et la seconde puissance CC.

2. Dispositif de charge hybride selon la revendication 1, dans lequel le combinateur de puissance est configuré pour combiner la première puissance CC avec la seconde puissance CC pour générer la puissance de charge pour le véhicule électrique lorsque la première puissance CC et la seconde puissance CC sont entrées simultanément.

3. Système de charge (1) **caractérisé en ce que** le système de charge comprend :

un système de puissance (5) comportant un panneau solaire, un système de stockage d'énergie et un système de conversion de puissance (30), le système de puissance étant connecté à un réseau électrique CA ; et

un dispositif de charge hybride (100) selon l'une des revendications 1 et 2.

4. Procédé de charge utilisant un dispositif de charge hybride comportant un convertisseur de courant alternatif-courant continu, CA-CC, un convertisseur CC-CC et un combinateur de puissance, le procédé de charge comprenant :

un paramétrage (S300) d'une puissance cible à partir d'une demande de charge provenant d'un véhicule électrique ;

une détermination (S312) d'une première puissance de sortie admissible du convertisseur CA-CC sur la base d'une condition de fonctionnement du convertisseur CA-CC ;

une détermination (S314) d'une seconde puissance de sortie admissible du convertisseur CC-CC sur la base d'une condition de fonctionnement du convertisseur CC-CC ;

une commande (S350) du convertisseur CA-CC pour convertir une puissance d'entrée CA fournie par au moins l'un parmi un système de conversion de puissance (30) et un réseau électrique CA (3) en une première puissance CC ;

une commande (S350) du convertisseur CC-CC pour convertir une puissance d'entrée CC fournie par le système de conversion de puissance en une seconde puissance CC ; et

une commande (S360) du combinateur de puissance pour générer la puissance de charge pour le véhicule électrique à partir d'au moins l'une parmi la première puissance CC ou la seconde puissance CC,

dans lequel le procédé de charge comprend en outre :

lorsqu'une somme de la première puissance de sortie admissible et de la seconde puissance de sortie admissible est égale ou supérieure à la puissance cible, un paramétrage (S330) d'une valeur de puissance de la première puissance CC et d'une valeur de puissance de la seconde puissance CC de sorte que (i) la puissance de charge est égale à la puissance cible et (ii) un rapport entre la première puissance CC et la seconde puissance CC est égal à un rapport entre la première puissance de sortie admissible et la seconde puissance de sortie admissible.

5. Procédé de charge selon la revendication 4, dans lequel la génération de la puissance de charge pour le véhicule électrique comprend une combinaison de la première puissance CC avec la seconde puissance CC pour générer la puissance de charge lorsque la première puissance CC et la seconde puissance CC sont entrées simultanément.

FIG. 1

FIG. 2

FIG. 3

```
                        ┌──────────┐
                        │  Start   │
                        └────┬─────┘
S300─┐                       │
┌──────────────────────────────┐
│   Set target power from charge│────────┐
│   request from electric vehicle│       │
└──────────────────────────────┘        │
S312─┐          │                        ▼              ┌─S314
┌──────────────────────────┐   ┌──────────────────────────┐
│  Determine first allowable│   │  Determine second allowable│
│ output power of AC-DC converter│ │ output power of DC-DC converter│
└──────────────────────────┘   └──────────────────────────┘
S320─┐          │                        │
┌─────────────────────────────┐
│  (First allowable output power +│    NO
│  Second allowable output power)├────────────────┐
│       ≥Target power?          │                 │
└─────────────────────────────┘                 │
S330─┐         │ YES                              │      ┌─S340
┌──────────────────────────────┐   ┌──────────────────────────────┐
│ Set power value of first DC power│ │ Set power value of first DC power│
│ and power value of second DC power│ │  and power value of second DC  │
│ (i) to make sum of first DC power│ │ power to make them equal to first│
│  and second DC power equal to   │ │ allowable output power and second│
│ target power, and (ii) to make ratio│ │allowable output power, respectively│
│ between first DC power and second│ └──────────────────────────────┘
│  DC power equal to ratio between │
│ first allowable output power and │
│  second allowable output power  │
└──────────────────────────────┘
S350─┐          │                        │
┌──────────────────────────┐
│    Control AC-DC converter to│
│  convert AC input power to first│
│   DC power and control DC-DC  │
│  converter to convert DC input│
│   power to second DC power   │
└──────────────────────────┘
S360─┐          │
┌──────────────────────────┐
│   Control power combiner to │
│  generate charge power for  │
│ electric vehicle from at least│
│   one of first DC power or  │
│     second DC power         │
└──────────────────────────┘
                │
           ┌────┴─────┐
           │   End    │
           └──────────┘
```

FIG. 4

```
                          ╭─────────╮
                          │  Start  │
                          ╰────┬────╯
                               │
S400 ┌─────────────────────────▼─────────────────────────┐
     │            Set target power from charge            │──────────┐
     │             request from electric vehicle          │          │
     └─────────────────────────┬─────────────────────────┘          │
                               │                                     │
S412 ┌─────────────────────────▼────────┐   S414 ┌──────────────────▼────────────┐
     │   Determine AC input power and first  │        │   Determine DC input power and second  │
     │ allowable output power of AC-DC converter │    │ allowable output power of DC-DC converter │
     └─────────────────────────┬────────┘        └──────────────────┬────────────┘
                               │◄────────────────────────────────────┘
S420                           │
     ╱─────────────────────────▼─────────────────╲
    ╱            AC input power ≥                  ╲  NO
    ╲     First allowable output power?            ╱──────────┐
     ╲          & DC input power <                ╱           │
      ╲   Second allowable output power?         ╱            │
       ╲─────────────────┬─────────────────────╱             │
                         │ YES                                │
S422 ┌───────────────────▼───────────────────┐               │
     │        Transmit first power control     │              │
     │              command to PCS             │              │
     └───────────────────┬───────────────────┘               │
                         │◄───────────────────────────────────┘
S430                     │
     ╱───────────────────▼───────────────────╲
    ╱            AC input power <              ╲  NO
    ╲     First allowable output power?        ╱──────────┐
     ╲          & DC input power ≥            ╱           │
      ╲   Second allowable output power?     ╱            │
       ╲─────────────┬───────────────────╱               │
                     │ YES                                │
S432 ┌───────────────▼───────────────────┐               │
     │     Transmit second power control   │             │
     │            command to PCS           │             │
     └───────────────┬───────────────────┘              │
                     │◄──────────────────────────────────┘
                ╭────▼────╮
                │  S440   │
                ╰─────────╯
```

FIG. 5

S432

S440

(First allowable output power +
Second allowable output power)
≥Target power?

NO

YES

S450

Set power value of first DC power
and power value of second DC
power (i) to make sum of first DC
power and second DC power equal
to target power, and (ii) to make ratio
between first DC power and second
DC power equal to ratio between
first allowable output power and
second allowable output power

S460

Set power value of first DC power
and power value of second DC
power to make them equal to
first allowable output power and
second allowable output power,
respectively

S470

Control AC-DC converter to
convert AC input power to first
DC power and control DC-DC
converter to convert DC input
power to second DC power

S480

Control power combiner to
generate charge power for
electric vehicle from at least one
of first DC power or
second DC power

End

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210113530
- US 2014320084 A1
- EP 3029804 A1
- US 2013049689 A1